# EUROPEAN PATENT APPLICATION

(11) **EP 2 933 055 A1**
(43) Date of publication of application: **21.10.2015**
(21) Application number: 13841083.2
(22) Date of filing: 04.09.2013
(51) Int. Cl.: B23Q 5/40, F16H 25/20, F16C 29/04

(54) **SCREW ASSEMBLY AND TRANSPORT APPARATUS INCLUDING SAME**

(30) Priority: 27.09.2012 KR 20120107920
(71) Applicant: Lee, Jong Ki, Gyeonggi-do 472-846 (KR)
(72) Inventor: Lee, Jong Ki, Gyeonggi-do 472-846 (KR)
(74) Representative: Isarpatent
(86) International application number: PCT/KR2013/007996
(87) International publication number: WO 2014/051272

(57) **Abstract**

The present invention relates to a screw assembly and to a transport apparatus including the same. The present invention includes a screw, a bearing shaft into which a portion of the screw is inserted, and a filling member that is positioned between a threaded rod of the screw and an inner circumferential surface of the bearing shaft. The filling member is formed to have an outer circumferential surface diameter that is larger than the outer circumferential surface diameter of the screw and is equal to or larger than the inner circumferential surface diameter of the bearing shaft.

## Description

### [Technical field]

The present invention relates to a screw assembly and a transport apparatus including the same.

### [Background]

A ball screw is an apparatus which changes a direction of motion and is connected to a motor of automated facilities so as to be used for position control. The ball screw includes a screw of long rod shape having a thread at an exterior circumference thereof and a ball nut coupled to the screw. A plurality of steel balls contacting with the thread of the screw are disposed at the ball nut.

The ball nut is coupled to an object that will be transported, and both ends of the screw is rotatably connected to another object. One end of the screw is connected to the motor so as to be rotated, and thereby the ball nut moves along a length direction of the screw.

One end portion of the screw is supported by a bearing. According to conventional arts, an end of the screw has a coupling end, a diameter of which is smaller than that of a middle portion of the screw, and the bearing is mounted at the coupling end. The coupling end passing through the bearing is coupled to one end portion of the coupling. The other end portion of the coupling is coupled to the motor and power of the motor is transmitted to the screw through the coupling.

The screws may be classified according to manufacturing method into screws manufactured through thread rolling and screws manufacturing through grinding.

Since the thread and the coupling end is manufactured by cutting a cylindrical raw material according to the grinding, the screw may be manufactured precisely. However, production cost is high according to the grinding.

The thread rolling is suitable to mass production and has low cost compared with the grinding, but has difficulties in controlling tolerance of an exterior diameter of the thread. That is, it is very frequent according to the thread rolling that a center of a circle formed by the threaded rod and a shaft center of the coupling end are misaligned. Therefore, vibration occurs when the screw works.

### [CONTENTS OF THE INVENTION]

### [Technical object]

The present invention has been made in an effort to provide a screw assembly and a transport apparatus including the same having advantages of easily and precisely aligning a shaft center, being strong with load, and facilitating assembling and disassembling.

### [Means for achieving the object]

A screw assembly according to an exemplary embodiment of the present invention may include a screw, a bearing shaft into which a portion of the screw is inserted, and a filling member positioned between a threaded rod of the screw and an inner circumferential surface of the bearing shaft, wherein a diameter of an outer circumferential surface of the filling member is larger than that of an outer circumferential surface of the screw and is equal to or larger than that of the inner circumferential surface of the bearing shaft.

The filling member may be a spring, the spring may have a straight portion including a straight cross-sectional portion substantially, and the straight portion of the spring may contact with the inner circumferential surface of the bearing shaft.

The bearing shaft may include a clamping portion, and the clamping portion may tighten up the filling member and the screw.

The screw assembly may further include a housing in which the bearing shaft is positioned, a bearing mounted in the housing and supporting the bearing shaft, and a connecting member mounted in the housing and having a side portion coupled to the bearing shaft.

The screw assembly may further include a motor having at least a portion thereof being inserted into the housing, wherein a shaft of the motor is coupled to the other side portion of the connecting member.

A side surface of the connecting member may push and support the bearing.

The screw assembly may further include a fixing member positioned between the connecting member and the bearing, and pushes and supports the bearing.

A screw assembly according to another exemplary embodiment of the present invention may include a screw, a bearing shaft into which a portion of the screw is inserted, a filling member positioned between a threaded rod of the screw and an inner circumferential surface of the bearing shaft, and a fixing bolt penetrating through the bearing shaft and engaged to the screw.

A transport apparatus according to an exemplary embodiment of the present invention may include the screw assembly that is described above, a frame which is connected to the housing and at which the screw is rotatably mounted, and a table connected to the screw so as to move linearly.

### [Effect of the Invention]

According to an exemplary embodiment of the present invention, the thread of the screw does not contact with the bearing shaft, and a spring having a center being the same as that of a virtual circle formed by the threaded rod contacts with the bearing shaft. Therefore, centers thereof and the center of the bearing shaft are the same. Since the bearing shaft, the spring and the screw rotate about the center formed by the threaded rod of the screw, vibration of the screw due to misaligning may be prevented and a position of the ball nut may be precisely controlled.

Since the straight portion of the spring other than a circular portion thereof contacts with the inner circumferential surface of the bearing shaft according to an exemplary embodiment of the present invention, a contact area is maximized so as to increase frictional force. In addition, the clamping portion is tightened up by a bolt and the spring is pressed toward the threaded rod of the screw. Therefore, the screw may be firmly fixed to the bearing shaft.

According to an exemplary embodiment of the present invention, machining an end of the screw is unnecessary so as to couple the screw to the bearing shaft and the screw is coupled to the bearing shaft in a state that the spring is coupled to the screw. Therefore, machining time of the end of the screw may be eliminated.

According to an exemplary embodiment of the present invention, the screw to which the spring is coupled is coupled to the bearing shaft, and the bearing shaft is coupled to the bearing mounted at the housing. That is, since the coupling end of the screw in prior arts is not formed according to an exemplary embodiment of the present invention, the bearing having larger interior diameter may be used. Therefore, supporting force of the screw may be improved.

Since the motor shaft and the bearing shaft are tightened up by control of the clamping portion of the connecting member according to an exemplary embodiment of the present invention, assembling and disassembling of the motor shaft and the screw is easy.

Since protrusions and depressions formed at a surface of an anti-rotation portion is stuck in an end portion of the screw and protrusions and depressions formed at the other surface of the anti-rotation portion is stuck in the inner circumferential surface of the bearing shaft when the fixing bolt is engaged with the end portion of the screw, the screw and the bearing shaft are prevented from moving separately according to an exemplary embodiment of the present invention.

### [BRIEF DESCRIPTION OF THE DRAWINGS]

FIG. 1 is a perspective view of a transport apparatus according to an exemplary embodiment of the present invention,
FIG. 2 is a perspective view of a screw assembly shown in FIG. 1,
FIG. 3 is a partial exploded perspective view of a screw assembly shown in FIG. 2,
FIG. 4 is a cross-sectional view of a screw assembly shown in FIG. 2,
FIG. 5 illustrates a cross-section of a screw,
FIG. 6 is a cutout perspective view of a bearing shaft shown in FIG. 2,
FIG. 7 is a cutout perspective view of a filling member shown in FIG. 2,
FIG. 8 is a cutout perspective view of a connecting member shown in FIG. 2,
FIG. 9 is an assembled cross-sectional view of a screw assembly according to another exemplary embodiment of the present invention,
FIG. 10 is an exploded perspective view of a screw assembly shown in FIG. 9,
FIG. 11 is an assembled cross-sectional view of a screw assembly according to another exemplary embodiment of the present invention,
FIG. 12 is an exploded sectional view of a screw assembly shown in FIG. 11,
FIG. 13 is an exploded perspective view of a bearing shaft and a motor shown in FIG. 11,
FIG. 14 is an enlarged view of A region in FIG. 11, and
FIG. 15 is cross-sectional view of a screw assembly according to another exemplary embodiment of the present invention.

### [Details for executing the invention]

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention. Like reference numerals designate like elements throughout the specification.

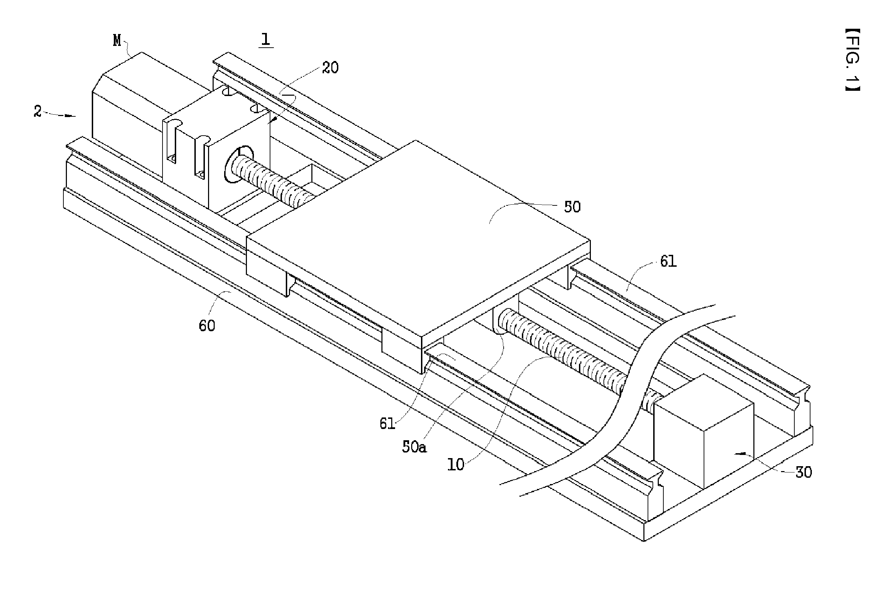

A screw assembly and a transport apparatus including the same according to an exemplary embodiment of the present invention will be described referring to FIG. 1 to FIG. 4. A screw assembly according to an exemplary embodiment of the present invention can be applied to a transport apparatus according to an exemplary embodiment of the present invention. Therefore, the transport apparatus to which the screw assembly is applied will be mainly described.

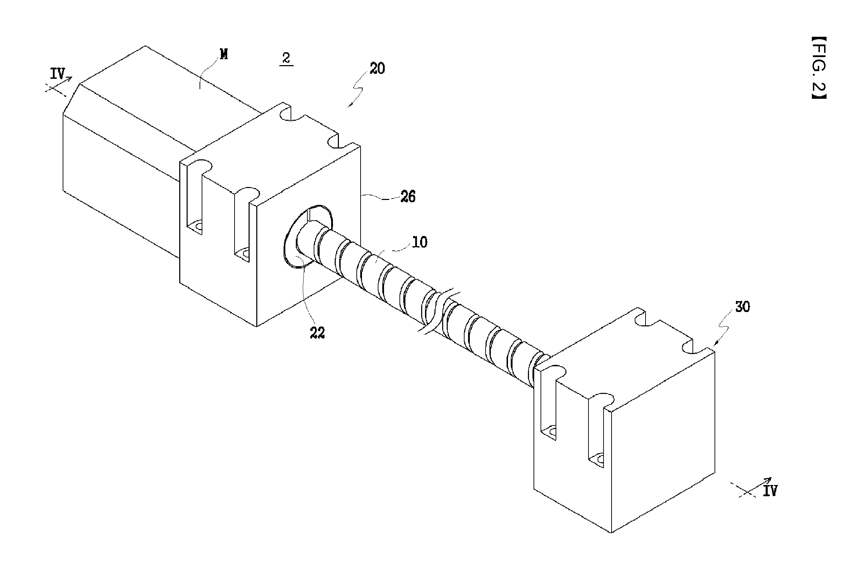

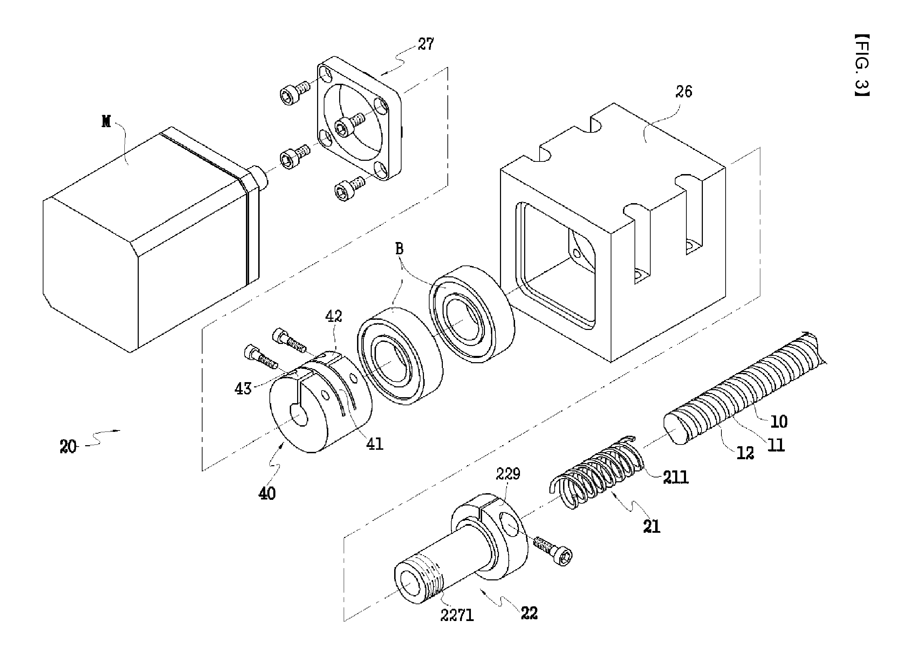

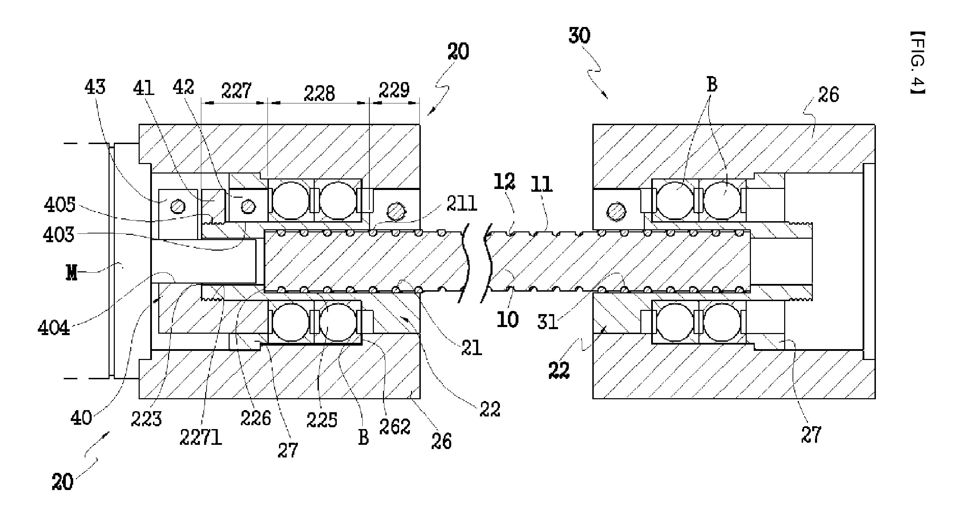

FIG. 1 is a perspective view of a transport apparatus according to an exemplary embodiment of the present invention, FIG. 2 is a perspective view of a screw assembly shown in FIG. 1, FIG. 3 is a partial exploded perspective view of a screw assembly shown in FIG. 2, and FIG. 4 is a cross-sectional view of a screw assembly shown in FIG. 2.

Referring to FIG. 1 to FIG. 4, a transport apparatus 1 according to the present exemplary embodiment includes a screw assembly 2, a frame 60 and a table 50. The screw assembly 2 includes a screw 10, filling members 21 and 31, bearing shafts 22 and 32, a connecting member 40 and a motor M.

A size of the frame 60 is determined according to an object that will be transported. The frame 60 may be fixed to a ground or a machining device (not shown), and a body of the machining device may functions as the frame as the case may be.

The screw assembly 2 and the table 50 are mounted on the frame 60.

The table 50 is connected to the frame 60 through a guide 61 and is connected to the screw 10 through a ball nut 50a. The table 50 moves linearly by operation of the screw 10. Connection between the table 50 and the guide 61 may be different from that shown in FIG. 1. A transport object (not shown) may be laid on the table 50 or a part of the machining device may be coupled to the table 50.

A fixing end portion 20 is mounted at a side portion of the frame 60 and a supporting end portion 30 is mounted at the other side portion of the frame 60. The screw 10 is rotatably mounted between the fixing end portion 20 and the supporting end portion 30.

The fixing end portion 20 includes a housing 26, the motor M mounted at the housing 26, the bearing shaft 22, a spring 21, a bearing B, the connecting member 40 and an outer ring pushing plate 27. The screw 10 is inserted into and fixed to the bearing shaft 22.

The screw 10 receives power from the motor M and is rotated. A threaded rod 12 is formed on an outer circumferential surface of the screw 10 and the ball nut 50a moves along the threaded rod 12. A steel ball (not shown) of the ball nut 50a is disposed on the threaded rod 12.

A screw thread 11 and the threaded rod 12 formed on the screw 10 may be manufactured through thread rolling. A center axis of the screw 10 with respect to the screw thread 11 may be misaligned from that with respect to the threaded rod 12 due to characteristics of thread rolling. In order to align the axis of the threaded rod 12 with a center of a shaft of the motor M, the filling members are coupled to portions of both edges of the screw 10.

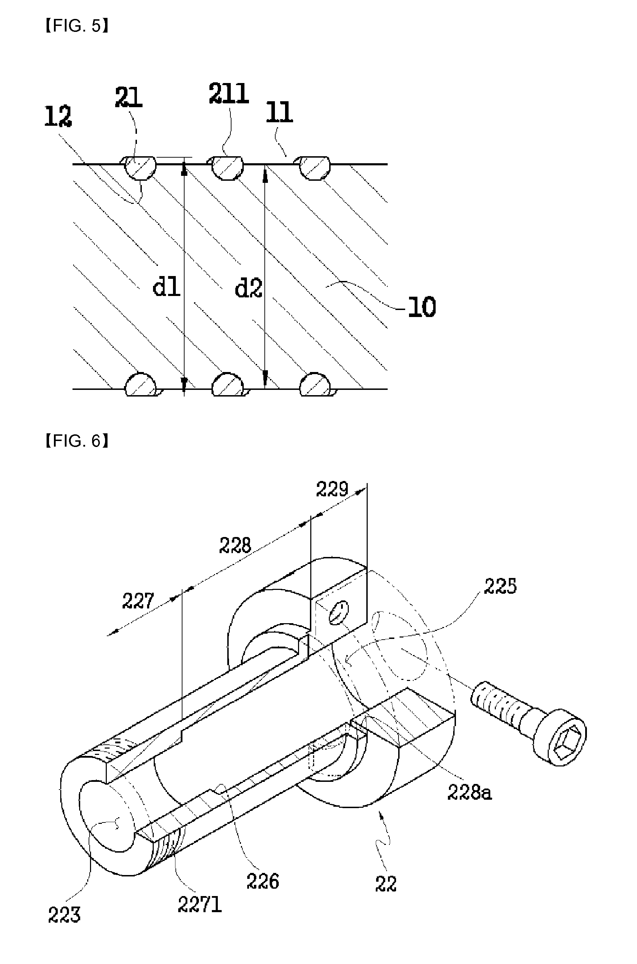

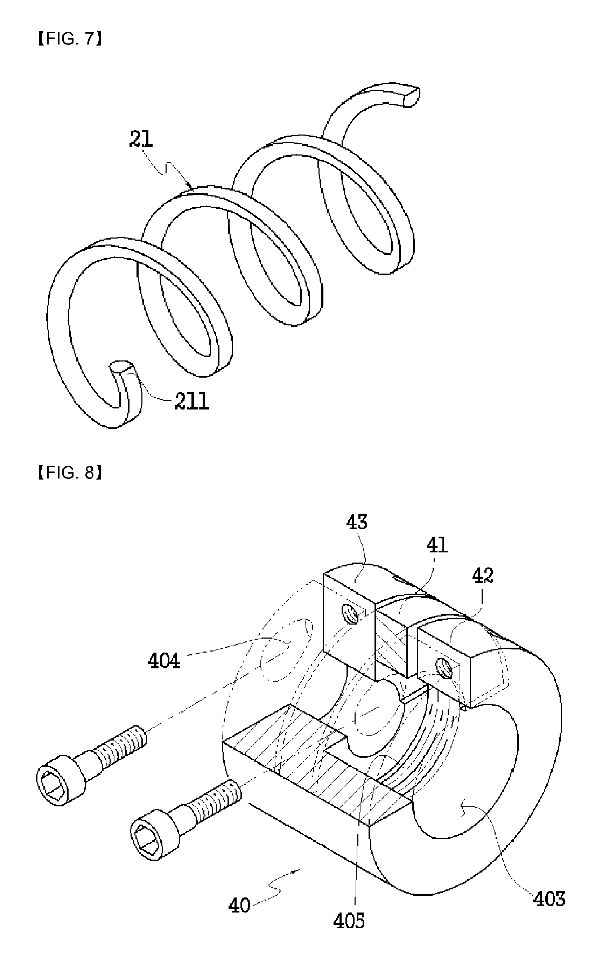

According to the present exemplary embodiment, the spring 21 is used as the filling member. The spring 21 is disposed along the threaded rod 12 of the screw 10. As shown in a cross-sectional view of the spring 21, A straight portion 211 (please see FIGs. 5 and 7) is formed on an outer circumferential surface of the spring 21. The straight portion 211 of the spring 21 may be formed by grinding. The outer circumferential surface of the spring 21 corresponding to the straight portion 211 contacts with an inner circumferential surface of the bearing shaft 22 that will be described below. However, there is not straight portion 211 on the spring 21.

A diameter d1 of the outer circumferential surface of the spring 21 mounted on the screw 10 is larger than that d2 of a virtual circle formed by the highest screw thread 11 (please refer to FIG. 5).

One end of the screw 10 where the spring 21 is mounted is inserted in the bearing shaft 22. The diameter d1 of the outer circumferential surface of the spring 21 is equal to or larger than that of the inner circumferential surface of the bearing shaft 22. Therefore, the outer circumferential surface of the spring 21 contacts with the inner circumferential surface of the bearing shaft 22, and the screw thread 11 of the screw 10 does not contact with the inner circumferential surface of the bearing shaft 22.

Since the straight portion 211 of the spring 21 other than a circular portion thereof contacts with the inner circumferential surface of the bearing shaft 22, a contact area may be maximized so as to increase frictional force. Therefore, the spring 21 may be firmly fixed to the bearing shaft 22.

Since the screw thread 11 having irregular height does not contact with the bearing shaft 22 and the spring 21 having the center that is the same as the center of the virtual circle formed by the threaded rod 12 contacts with the bearing shaft 22 if the screw 10 is formed by thread rolling, the centers corresponds to the center of the bearing shaft 22. Since the bearing shaft 22, the spring 21 and the screw 10 rotate about the center of the virtual circle formed by the threaded rod 12 of the screw 10, vibration of the screw due to misalignment may be prevented. Therefore, the screw manufactured by rolling thread having low manufacturing cost may perform as the screw manufactured by grinding according to the present invention.

The bearing shaft 22 is mounted in the housing 26 and includes a first coupling portion 227, a second coupling portion 228 and a clamping portion 229. A first insert hole 223 and a second insert hole 225 are formed in the first coupling portion 227, the second coupling portion 228 and the clamping portion 229. A male thread 2271 (please refer to FIG. 6) is formed at the first coupling portion 227.

The shaft of the motor M is inserted in the first insert hole 223 and the screw 10 is inserted in the second insert hole 225. Since a cross-section of the second insert hole 225 is larger than that of the first insert hole 223, a stepped portion 226 is formed between the second insert hole 225 and the first insert hole 223. Therefore, the screw 10 is inserted until contacting with the stepped portion 226 and is fixed.

Both ends of the clamping portion 229 are spaced from each other and are tightened up by a bolt. The clamping portion 229 presses the outer circumferential surface of the spring 21 and fixes the screw 10 firmly. Therefore, the screw 10 does not run idle in the bearing shaft 22 and receives torque of the bearing shaft 22. In addition, since the clamping portion 229 presses the entire outer circumferential surface of the spring 21 simultaneously, the screw 10 is not biased in any one direction.

The second coupling portion 228 is connected to the clamping portion 229, but a part of a boundary portion 228a of the second coupling portion 228 and the clamping portion 229 is disconnected from the clamping portion 229 such that the clamping portion 229 can be tightened up.

The bearing B is coupled to the second coupling portion 228. One or more bearings B may be mounted and a side of the bearing B is supported by a step 262 in the housing 26. A size of an inner ring of the bearing B may be determined according to that of the second coupling portion 228.

The outer ring pushing plate 27 is coupled in the housing 26 and contacts with an outer ring of the bearing B. Therefore, the outer ring pushing plate 27 fixes the bearing B.

The first coupling portion 227 is coupled to the connecting member 40.

The connecting member 40 is disposed in the housing 26, and includes a body 41 and first and second engaging portions 42 and 43 connected respectively to both sides of the body 41. A third insert hole 403 and a fourth insert hole 404 are formed in the connecting member 40 (please refer to FIG. 8).

A cross-section of the third insert hole 403 is larger than that of the fourth insert hole 404. A female thread 405 is formed on the third insert hole 403. Shapes of the first and second engaging portions 42 and 43 are substantially similar to a shape of the clamping portion 229 of the bearing shaft 22. However, the shapes of the first and second engaging portions 42 and 43 may be variously changed according to design.

The first coupling portion 227 is inserted in the third insert hole 403, and the male thread 2271 formed at the first coupling portion 227 and the female thread 405 formed at the third insert hole 403 are engaged with each other. However, such engagement may be omitted.

If the first coupling portion 227 is inserted in the third insert hole 403, the first engaging portion 42 is positioned at the first coupling portion 227. At this time, if the first engaging portion 42 is tightened up by a bolt, the connecting member 40 and the bearing shaft 22 can be firmly fixed. In addition, since a side surface of the first engaging portion 42 contacts with the inner ring of the bearing B and fixes the bearing B, additional means for fixing the inner ring of the bearing B is not necessary.

The shaft of the motor M is inserted in the fourth insert hole 404 of the connecting member 40 and is inserted in the first insert hole 223 of the bearing shaft 22, simultaneously. The shaft of the motor M is tightened up by the second engaging portion 43.

Therefore, torque of the motor M is transmitted to the screw 10 through power delivery device such as the shaft of the motor M, the connecting member 40, the bearing shaft 22 and so on. As the shaft of the motor M is fixed to the connecting member 40, a center of the shaft of the motor M and a center of the connecting member 40 coincide with each other. In addition, the centers coincide with the centers of the bearing shaft 22 and the threaded rod 12. Therefore, the screw rotates without shaking when the motor operates and a position of the ball nut can be precisely controlled.

Referring to FIG. 2 and FIG. 4, the supporting end portion 30, similar to the fixing end portion 20, includes a housing 26, a bearing shaft 22, a spring 31, a bearing B and an outer ring pushing plate 27. The opposite end portion of the screw 10 coupled to the fixing end portion 20 is coupled to the bearing shaft 22 of the supporting end portion 30.

The housing 26, the bearing shaft 22, the spring 31, the bearing B and the outer ring pushing plate 27 of the supporting end portion 30 are substantially the same as those of the fixing end portion 20, according to the present exemplary embodiment.

Since the supporting end portion 30 supports an end portion of the screw 10, the motor M is not mounted at the supporting end portion 30. In addition, the connecting member 40 for connecting the motor M and the bearing shaft 22 is removed (please refer to FIG. 8). The screw 10 positioned at the supporting end portion 30 may be formed as a free end or a fixed end.

A male thread is not formed at the bearing shaft 22 of the supporting end portion 30 because the bearing shaft 22 does not need to be connected to the connecting member 40. Additional means (not shown) for supporting the bearing B instead of the connecting member 40 may be mounted. Shapes of the housing 26, the bearing shaft 22, the spring 31, the bearing B and the outer ring pushing plate 27 of the supporting end portion 30 may be partially changed according to design. For example, a hole corresponding the motor may be removed from the housing 26 of the supporting end portion 30, and the outer ring pushing plate 27 may be substituted with a snap ring.

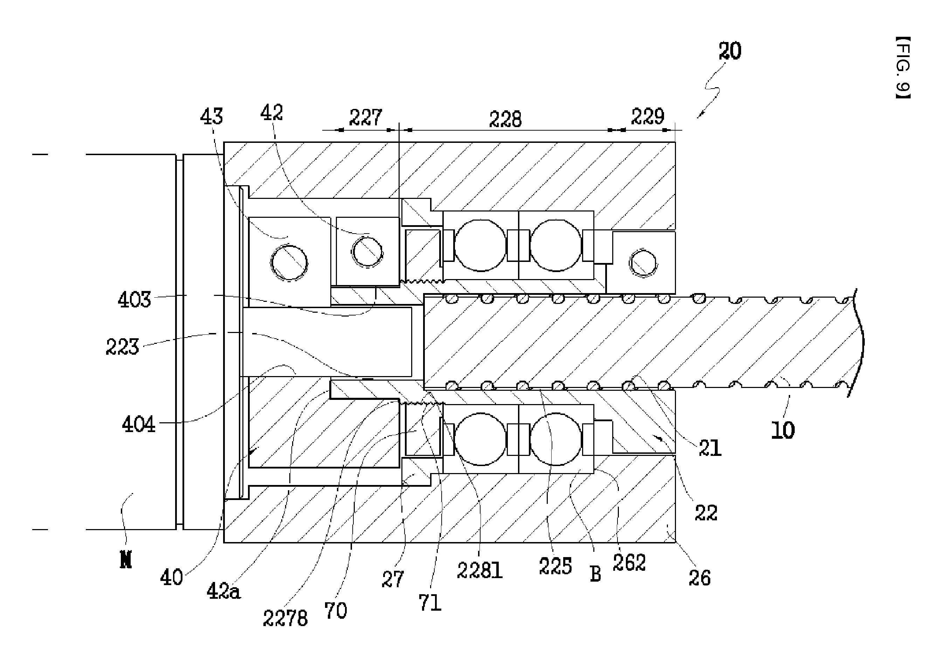

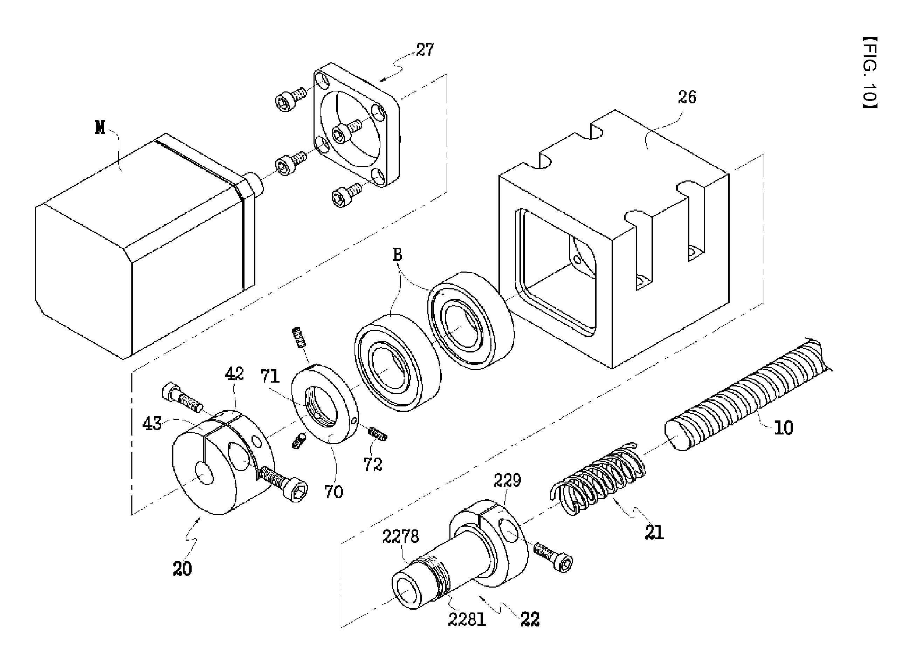

A screw assembly according to another exemplary embodiment of the present invention will be described with reference to FIG. 9 and FIG. 10.

FIG. 9 is an assembled cross-sectional view of a screw assembly according to another exemplary embodiment of the present invention, and FIG. 10 is an exploded perspective view of a screw assembly shown in FIG. 9.

Referring to FIG. 9 and FIG. 10, a screw assembly 1 according to the present exemplary embodiment includes a screw 10, a fixing end portion 20 and a supporting end portion (not shown).

The fixing end portion 20 and the supporting end portion according to the present exemplary embodiment are substantially the same as the fixing end portion 20 and the supporting end portion 30 illustrated in FIG. 1 to FIG. 8.

However, the fixing end portion 20 according to the present exemplary embodiment further includes a fixing member 70, and shapes of the connecting member 40 and the bearing shaft 22 are partially different from those illustrated in FIG. 1 to FIG. 8.

The bearing shaft 22 according to the present exemplary embodiment is connected to a bearing B mounted in a housing 26, and includes a first coupling portion 227, a second coupling portion 228 and a clamping portion 229. A first insert hole 223 into which a shaft of a motor M is inserted and a second insert hole 225 into which the screw 10 coupled to a spring 21 is inserted are formed in the bearing shaft 22.

According to the present exemplary embodiment, different from an exemplary embodiment illustrated in FIG. 1 to FIG. 8, a male thread 2281 is formed at the second coupling portion 228 and a male thread is not formed at the first coupling portion 227. The bearing B is not positioned at a portion where the male thread 2281 is formed.

A diameter of the first coupling portion 227 is different from that of the second coupling portion 228. Therefore, a step 2278 is formed between outer circumferential surfaces of the first coupling portion 227 and the second coupling portion 228. However, the diameter of the first coupling portion 227 may be equal to that of the second coupling portion 228, and in this case, the step 2278 is not formed.

The clamping portion 229 presses the spring 21 by a bolt and fixes the screw 10 to the bearing shaft 22. Therefore, the screw 10 does not run idle in the bearing shaft 22 and receives torque of the bearing shaft 22. In addition, since the clamping portion 229 presses the entire outer circumferential surface of the spring 21 simultaneously, the screw 10 is not biased in any one direction.

The connecting member 40 includes a first engaging portion 42 and a second engaging portion 43. A third insert hole 403 into which the first coupling portion 227 is inserted is formed in the first engaging portion 42, and a fourth insert hole 404 into which the shaft of the motor M is inserted is formed in the second engaging portion 43. A diameter of the third insert hole 403 is larger than that of the fourth insert hole 404. Therefore, a raised spot 42a is formed between the third insert hole 403 and the fourth insert hole 404.

When the first coupling portion 227 is inserted into the third insert hole 403, the step 228a contacts with the first engaging portion 42. In addition, if an end of the first coupling portion 227 contacts with the raised spot 42a, the bearing shaft 22 is not further inserted into the connecting member 40.

If the first coupling portion 227 is inserted into the third insert hole 403, the first engaging portion 42 is positioned at the first coupling portion 227. If the first engaging portion 42 is tightened up at this time, the connecting member 40 and the bearing shaft 22 may be fixed more firmly.

The shaft of the motor M is inserted into the fourth insert hole 404 of the connecting member 40 and is tightened up by the second engaging portion 43.

The fixing member 70 is positioned between the connecting member 40 and the bearing B and a female thread 71 engaged with the male thread 2281 is formed on an inner circumferential surface of the fixing member 70. The fixing member 70 threaded with the bearing shaft 22 supports an inner ring of the bearing B. In order to increase coupling force of the bearing shaft 22 and the fixing member 70, a set crew 72 may be used.

The bolts tightening up the first engaging portion 42, the second engaging portion 43 and the clamping portion 229 are tightened in the same direction on the same straight line.

If the bolts tightening up the first engaging portion 42, the second engaging portion 43 and the clamping portion 229 does not lie on the same straight line and are tightened in different directions, a center of the shaft of the motor M may be misaligned from a center of the screw 10.

A raised spot 262 is formed in the housing 26 and supports an outer ring of the bearing B, and the outer ring pushing plate 27 is coupled in the housing 26 and supports the outer ring of the bearing B according to the present exemplary embodiment.

The supporting end portion according to the present exemplary embodiment may be the same as that according to an exemplary embodiment illustrated in FIG. 1 to FIG. 8. However, the supporting end portion may be similar to the fixing end portion 20 according to the present exemplary embodiment.

Constituent elements illustrated in FIG. 1 to FIG. 8 may be used in the present exemplary embodiment.

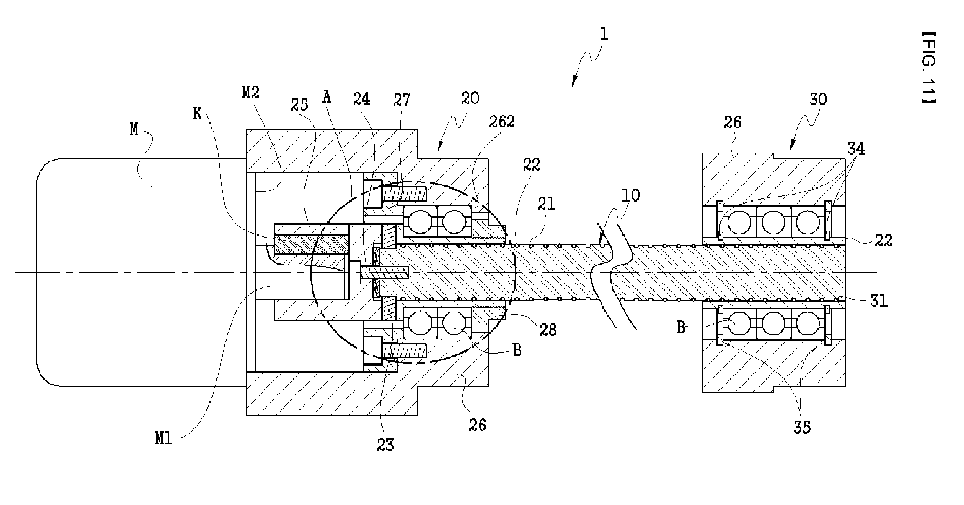

A screw assembly according to another exemplary embodiment of the present invention will be described with reference to FIG. 11 to FIG. 14. The screw assembly according to the present exemplary embodiment may be mounted at the frame 60 illustrated in FIG. 1.

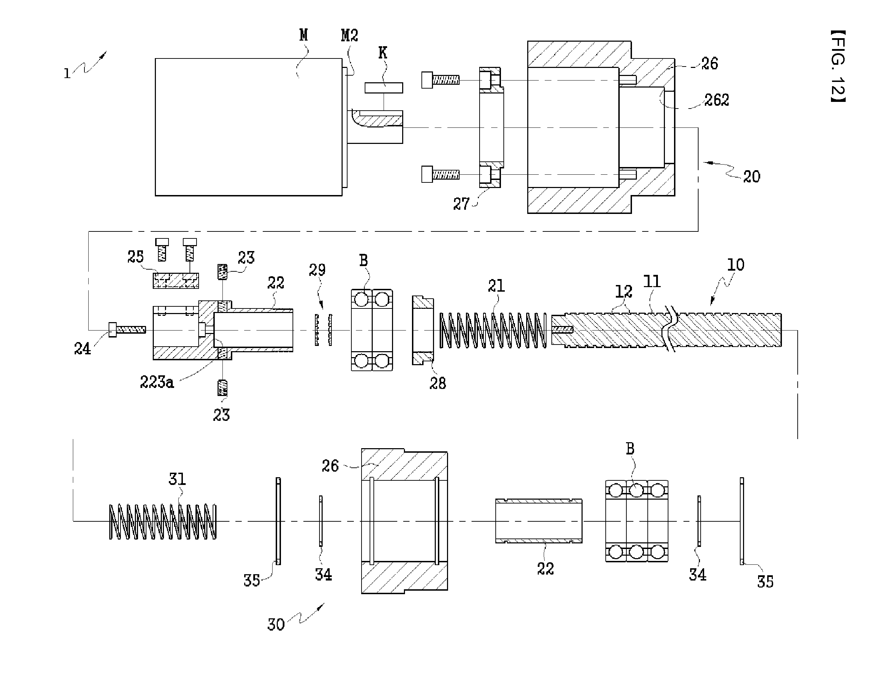

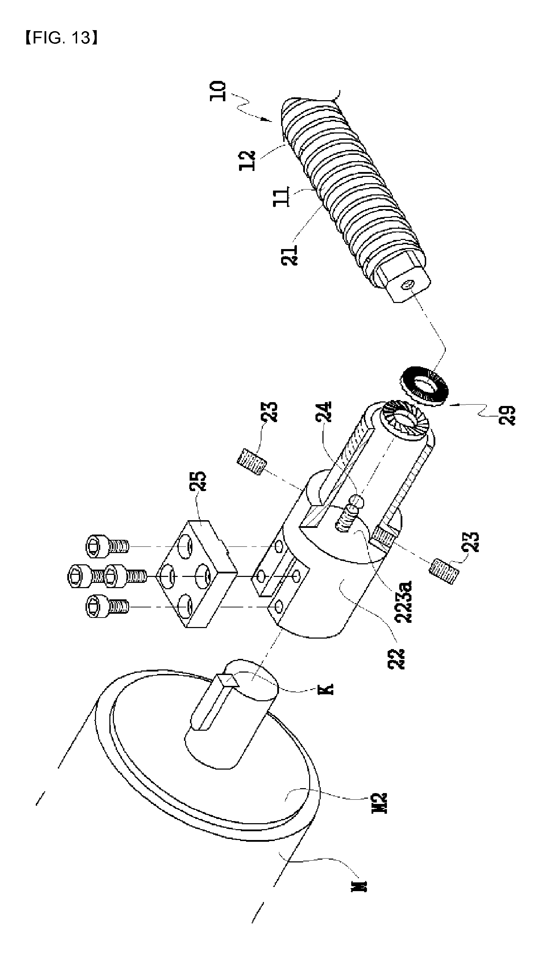

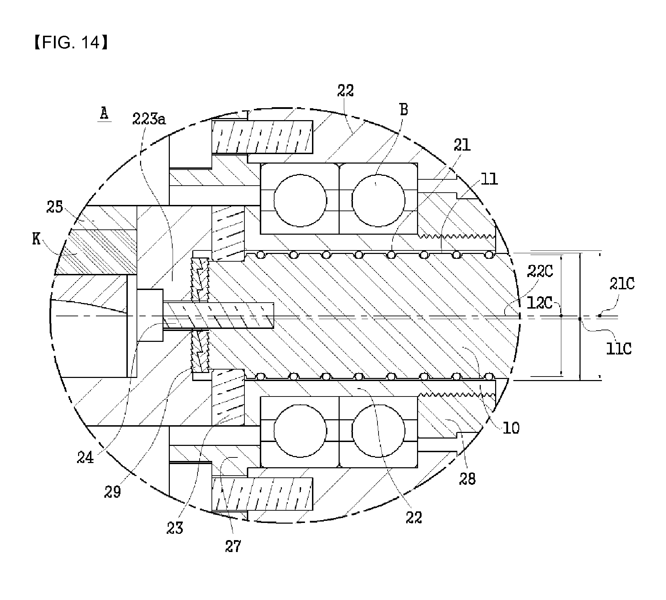

FIG. 11 is an assembled cross-sectional view of a screw assembly according to another exemplary embodiment of the present invention, FIG. 12 is an exploded sectional view of a screw assembly shown in FIG. 11, FIG. 13 is an exploded perspective view of a bearing shaft and a motor shown in FIG. 11, and FIG. 14 is an enlarged view of A region in FIG. 11.

Referring to FIG. 11 to FIG. 14, the screw assembly 1 according to the present exemplary embodiment includes a screw 10, a fixing end portion 20 and a supporting end portion 30.

The screw 10 according to the present exemplary embodiment is substantially the same as the screw 10 illustrated in FIG. 1 to FIG. 4.

The fixing end portion 20 transmits torque to and rotatably supports the screw 10. The fixing end portion 20 includes filling members, a bearing shaft 22, a housing 26, an outer ring pushing plate 27, an inner ring pushing plate 28 and an anti-rotation portion 29.

The filling members are coupled to portions of both edges of the screw 10. The filling member may be a spring 21 according to the present exemplary embodiment. The spring 21 is coupled along a threaded rod 12, and a center 12C of the threaded rod 12 coincides with a center 21C of the spring 21 (please refer to FIG. 14). A diameter of an outer circumferential surface of the spring 21 is larger than an exterior diameter of the screw 10 and is protruded from an outer circumferential surface of the screw 10. The straight portion 211, as shown in FIG. 7, may be formed on an outer circumferential surface of the spring 21.

The housing 26 may be coupled to a frame or a machining device of a transport apparatus, and a bearing B is disposed in the housing 26. A step 262 supporting the bearing B is formed in the housing 26.

The bearing shaft 22 is disposed in the housing 26 and is supported by the bearing B. A shaft of a motor M is coupled to a side surface of the bearing shaft 22, and the bearing shaft 22 and the shaft of the motor M are coupled by a key K. The key K is fixed to the bearing shaft 22 by a key cover 25.

An end portion of the screw 10 coupled with the spring 21 is inserted into the other side surface of the bearing shaft 22. An outer circumferential surface of the spring 21 contacts with an inner circumferential surface of the bearing shaft 22.

The center 21C of the spring 21 coincides with the center 12C of the threaded rod 12. In addition, since the spring 21 contacts with the inner circumferential surface of the bearing shaft 22, the center 21C of the spring 21 coincides with the center 22C of the bearing shaft 22. Therefore, the center 12C of the threaded rod 12 coincides with the center 22C of the bearing shaft 22 and coincides with a center of the shaft of the motor M.

A partition 223a is formed in the bearing shaft 22. The screw 10 is fixed to the bearing shaft 22 through a fixing bolt 24 penetrating through the partition 223a and the set screw 23 coupled to the bearing shaft 22 from the exterior to the interior.

The anti-rotation portion 29 has an annular shape and is disposed between the partition 223a and the screw 10. When the fixing bolt 24 is coupled to the screw 10, the anti-rotation portion 29 tightly contacts with the screw 10 and the partition 223a so as to prevent the screw 10 from being bent or from running idle in the bearing shaft 22.

The outer ring pushing plate 27 supports an outer ring part of the bearing B and the inner ring pushing plate 28 supports an inner ring part of the bearing B. The outer ring pushing plate 27 and the inner ring pushing plate 28 prevent the bearing B from being departed from the housing 26.

A protruding portion M2 is formed at the motor M facing the housing 26 and is inserted into the housing 26. Therefore, the motor M can be coupled with the housing 26 precisely. Since the protruding portion M2 is coupled with the housing 26, the centers of the shaft of the motor M and the bearing shaft 22 coincide with each other.

The supporting end portion 30 supports the opposite end portion of the screw 10 coupled to the fixing end portion 20, and includes a filling member 31, a bearing shaft 22, a bearing B, a first fixing ring 34, a housing 26 and a second fixing ring 35. Since the supporting end portion 30 supports an end portion of the screw 10, the motor is not mounted at the supporting end portion 30.

The filling member 31 and the bearing B of the supporting end portion 30 are substantially the same as those of the fixing end portion 20 according to the present exemplary embodiment.

A shape of the housing 26 of the supporting end portion 30 is partially different from that of the housing 26 of the fixing end portion 20. For example, the housing 26 of the supporting end portion 30, different from the housing 26 of the fixing end portion 20, does not need to have a space for connecting the motor M.

An outer circumferential surface of the filling member 31 contacts with an inner circumferential surface of the bearing shaft 22 of the supporting end portion 30. Means for connecting the bearing shaft 22 with the motor M can be removed from the bearing shaft 22 of the supporting end portion 30.

The first fixing ring 34 is disposed in the housing 26, is coupled to the bearing shaft 22, and supports the inner ring of the bearing B. The second fixing ring 35 is disposed in the housing 26 and supports the outer ring of the bearing B. The first fixing ring 34 and the second fixing ring 35 prevent the bearing B from being departed from the housing 26. The first fixing ring 34 and the second fixing ring 35 have snap ring shapes that have both end portions spaced from each other and can be contracted or expanded.

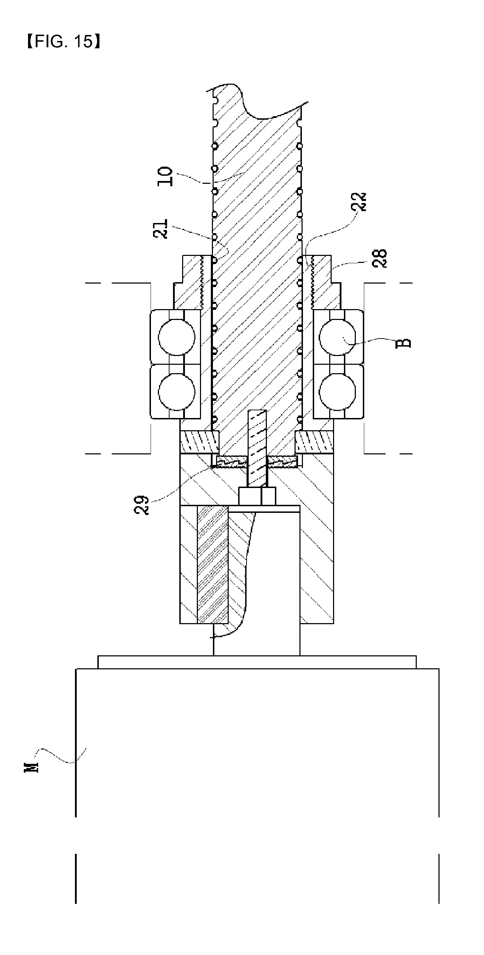

Referring to FIG. 15, a screw assembly according to another exemplary embodiment of the present invention includes most of the constituent elements according to the exemplary embodiment illustrated in FIG. 11 to FIG. 14. However, the present exemplary embodiment does not include a housing 26 (please refer to FIG. 11). The bearing B may be fixed to a body of a machining device since the housing is not used.

The bearing shaft 22 is rotatably coupled to the bearing B, and the screw 10 coupled with the spring 21 is connected to the bearing shaft 22. The motor M is connected to the bearing shaft 22.

A side surface of the bearing B is supported by a step formed at the bearing shaft 22 and the other side surface of the bearing B is pressed and fixed by the outer ring pushing plate 28 connected to the bearing shaft 22 such that the bearing B is not departed from the body. The side surface of the bearing B may be supported by a stepped portion (not shown) formed at the body. Means for preventing the bearing B from being departed from the body may be changed variously. Other constituent elements are the same as those illustrated in FIG. 11 to FIG. 14.

The exemplary embodiment illustrated in FIG. 1 to FIG. 4 does not include the housing 26. In this case, the bearing B may be fixed to a body of a machining device.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A screw assembly
a screw,
a bearing shaft into which a portion of the screw is inserted, and
a filling member positioned between a threaded rod of the screw and an inner circumferential surface of the bearing shaft,
wherein a diameter of an outer circumferential surface of the filling member is larger than that of an outer circumferential surface of the screw and is equal to or larger than that of the inner circumferential surface of the bearing shaft.

2. The screw assembly of claim 1, wherein the filling member is a spring, the spring has a straight portion including a straight cross-sectional portion substantially, and the straight portion of the spring contacts with the inner circumferential surface of the bearing shaft.

3. The screw assembly of claim 1, wherein the bearing shaft includes a clamping portion, and the clamping portion tightens up the filling member and the screw.

4. The screw assembly of claim 1, further comprising:
a housing in which the bearing shaft is positioned,
a bearing mounted in the housing and supporting the bearing shaft, and
a connecting member mounted in the housing and having a side portion coupled to the bearing shaft.

5. The screw assembly of claim 4, further comprising a motor having at least a portion thereof being inserted into the housing,
wherein a shaft of the motor is coupled to the other side portion of the connecting member.

6. The screw assembly of claim 4, wherein a side surface of the connecting member pushes and supports the bearing.

7. The screw assembly of claim 4, further comprising a fixing member positioned between the connecting member and the bearing, and pushes and supports the bearing.

8. A screw assembly
a screw,
a bearing shaft into which a portion of the screw is inserted,
a filling member positioned between a threaded rod of the screw and an inner circumferential surface of the bearing shaft, and
a fixing bolt penetrating through the bearing shaft and engaged to the screw.

9. A transport apparatus, comprising:
the screw assembly of any one of claim 1 to claim 8,
a frame which is connected to the housing and at which the screw is rotatably mounted, and
a table connected to the screw so as to move linearly.
